# EUROPEAN PATENT APPLICATION

(11) **EP 4 718 151 A1**
(43) Date of publication of application: **01.04.2026**
(21) Application number: 24864160.7
(22) Date of filing: 14.06.2024
(51) Int. Cl.: G02F 1/035, G02F 1/03

(54) **ELECTRO-OPTIC MODULATOR AND OPTICAL EMITTER**

(30) Priority: 12.09.2023 CN 202311172015
(71) Applicant: Nanjing Lycore Technologies Co., Ltd., Nanjing, Jiangsu 210000 (CN)
(72) Inventor: LIANG, Hanxiao, Suzhou, Jiangsu 215123 (CN); SONG, Yipin, Suzhou, Jiangsu 215123 (CN); ZHOU, Yingcong, Suzhou, Jiangsu 215123 (CN); WU, Haicang, Suzhou, Jiangsu 215123 (CN); MAO, Wenhao, Suzhou, Jiangsu 215123 (CN); SONG, Shiwei, Suzhou, Jiangsu 215123 (CN); SUN, Weiqi, Suzhou, Jiangsu 215123 (CN); YU, Qingyang, Suzhou, Jiangsu 215123 (CN); ZHANG, Zhouyu, Suzhou, Jiangsu 215123 (CN)
(74) Representative: MFG Patentanwälte Meyer-Wildhagen Meggle-Freund Gerhard PartG mbB
(86) International application number: PCT/CN2024/099340
(87) International publication number: WO 2025/055435

(57) **Abstract**

An electro-optic modulator and an optical emitter including the electro-optic modulator are provided. The electro-optic modulator includes a first branch waveguide (101), a second branch waveguide (102), and a radio frequency electrode. The radio frequency electrode includes a first ground electrode (111), a first signal electrode (112), a second ground electrode (113), a second signal electrode (114), and a third ground electrode (115) which are spaced apart in sequence, where the first signal electrode (112) and the second signal electrode (114) are configured to receive driving signals, the first branch waveguide (101) and the second branch waveguide (102) are separately located in a spacing region between any two adjacent electrodes of the radio frequency electrode, and electric field directions at positions where the first branch waveguide (101) and the second branch waveguide (102) are located are opposite to each other.

## Description

### CROSS-REFERENCE TO RELATED APPLICATION

The present application claims priority to Chinese Invention Patent Application No. 202311172015.1, filed on September 12, 2023 and entitled "ELECTRO-OPTIC MODULATOR AND OPTICAL EMITTER", and the disclosure of the priority claimed by the present application is incorporated herein by reference in its entirety.

### TECHNICAL FIELD

The present disclosure relates to the technical field of optical waveguides, and in particular to an electro-optic modulator and an optical emitter.

### BACKGROUND

An electro-optic modulator is a modulator made by using the electro-optic effect of some electro-optic crystals, such as lithium niobate (LiNb03) crystals, gallium arsenide (GaAs) crystals, and lithium tantalate (LiTa03) crystals. The electro-optic effect means that when a voltage is applied to an electro-optic crystal, a refractive index of the electro-optic crystal will change, resulting in changes in characteristics of light waves passing through the crystal, and thus realizing modulation of a phase, an amplitude, an intensity, and a polarization state of optical signals.

However, crosstalk between electrodes of the electro-optic modulator will affect the stability of a transmission signal, thereby degrading the performance of the electro-optic modulator, which urgently needs to be improved.

### SUMMARY

Embodiments of the present disclosure provide an optical modulation module and an optical modulator, to improve the stability of a transmission signal, thereby improving the performance of a device.

According to an aspect of the present disclosure, an electro-optic modulator is provided. The electro-optic modulator includes: a first branch waveguide, a second branch waveguide, and a radio frequency electrode. The radio frequency electrode includes a first ground electrode, a first signal electrode, a second ground electrode, a second signal electrode, and a third ground electrode which are spaced apart in sequence, where the first signal electrode and the second signal electrode are configured to receive driving signals, the first branch waveguide and the second branch waveguide are separately located in a spacing region between any two adjacent electrodes of the radio frequency electrode, and electric field directions at positions where the first branch waveguide and the second branch waveguide are located are opposite to each other.

In some embodiments, respective first terminals of the first ground electrode, the second ground electrode, and the third ground electrode are connected to a first grounding signal line, and respective second terminals of the first ground electrode, the second ground electrode, and the third ground electrode, which are away from the respective first terminals, are connected via a wire.

In some embodiments, the respective first terminals of the first ground electrode, the second ground electrode, and the third ground electrode are connected via a wire.

In some embodiments, the respective second terminals of the first ground electrode, the second ground electrode, and the third ground electrode are each connected to a second grounding signal line.

In some embodiments, the electro-optic modulator further includes a first load resistor and a second load resistor connected in parallel, where a first terminal of the first load resistor is connected to the first signal electrode, a first terminal of the second load resistor is connected to the second signal electrode, and a second terminal of the first load resistor is connected to a second terminal of the second load resistor and is connected to a power supply voltage.

In some embodiments, the electro-optic modulator further includes a capacitor, where the respective second terminals of the first ground electrode, the second ground electrode, and the third ground electrode are connected to a first plate of the capacitor, and the respective second terminals of the first load resistor and the second load resistor are connected to a second plate of the capacitor.

In some embodiments, the electro-optic modulator further includes a light splitting unit separately connected to an input terminal of the first branch waveguide and an input terminal of the second branch waveguide, and a light combining unit separately connected to an output terminal of the first branch waveguide and an output terminal of the second branch waveguide.

According to an aspect of the present disclosure, an optical emitter is provided. The optical emitter includes the electro-optic modulator in the previous aspect.

In some embodiments, the optical emitter further includes an amplifier, where the amplifier is connected to the electro-optic modulator, to separately provide driving signals to a first signal electrode and a second signal electrode of the electro-optic modulator.

In some embodiments, the optical modulator further includes a first load resistor and a second load resistor connected in parallel, a first terminal of the first load resistor is connected to the first signal electrode, a first terminal of the second load resistor is connected to the second signal electrode, a second terminal of the first load resistor is connected to a second terminal of the second load resistor and is connected to a power supply voltage, and the power supply voltage is supplied to the amplifier to power the amplifier.

According to one or more embodiments of the present disclosure, a ground electrode is arranged between the first signal electrode and the second signal electrode, so that crosstalk between adjacent electrodes may be suppressed to a specific extent. Accordingly, this design solution of the embodiments of the present disclosure can improve the stability of the transmission signal, thereby improving the performance of the device.

It should be understood that the content described in this section is not intended to identify critical or important features of the embodiments of the present disclosure, and is also not intended to limit the scope of the present disclosure. Other features of the present disclosure will be readily understood with reference to the following description.

### BRIEF DESCRIPTION OF THE DRAWINGS

More details, features and advantages of the present disclosure are disclosed in the following description of exemplary embodiments with reference to the accompanying drawings, in which:
FIG. 1 is a schematic structural diagram of an electro-optic modulator according to some exemplary embodiments of the present disclosure;
FIG. 2 is a schematic structural diagram of an electro-optic modulator according to some other exemplary embodiments of the present disclosure;
FIG. 3 is a schematic structural diagram of an electro-optic modulator according to still some other exemplary embodiments of the present disclosure; and
FIG. 4 is a schematic structural diagram of an optical emitter according to some exemplary embodiments of the present disclosure.

List of reference signs:
optical emitter 1000; electro-optic modulator 100, first branch waveguide 101, second branch waveguide 102, first ground electrode 111, first signal electrode 112, second ground electrode 113, second signal electrode 114, third ground electrode 115, first grounding signal line 121, second grounding signal line 122, first load resistor 131, second load resistor 132, capacitor 140, light splitting unit 151, light combining unit 152, amplifier 200.

### DETAILED DESCRIPTION OF EMBODIMENTS

Only some exemplary embodiments will be briefly described below. As can be appreciated by those skilled in the art, the described embodiments can be modified in various ways without departing from the spirit or scope of the present disclosure. Accordingly, the accompanying drawings and the description are considered illustrative in nature rather than limited.

Mach-Zehnder optical waveguides are widely used in electro-optic modulators. A Mach-Zehnder optical waveguide includes an incident waveguide for guiding light from the outside, a branching section for splitting the light guided by the incident waveguide into two paths for propagation, two parallel waveguides for propagating branched light at a rear section of the branching section, and an emergent waveguide for combining the light propagating in the two parallel waveguides and for outputting it to the outside. The Mach-Zehnder optical modulator includes a control electrode for controlling a phase change of light waves propagating in the parallel waveguides by applying a voltage and utilizing an electro-optic effect. The control electrode usually includes an RF (high frequency) signal electrode (hereinafter referred to as "signal electrode") formed on or near an upper part of the above-mentioned parallel waveguides, and a ground electrode arranged separately from the signal electrode. A plurality of signal electrodes arranged on the parallel waveguides are close to each other. Therefore, when a modulation frequency is widened, electrical crosstalk may occur between adjacent electrodes, which in turn causes performance degradation of the electro-optic modulator.

Embodiments of the present disclosure provide an electro-optic modulator and an optical emitter, to alleviate crosstalk between their electrodes, thereby improving the performance of a device.

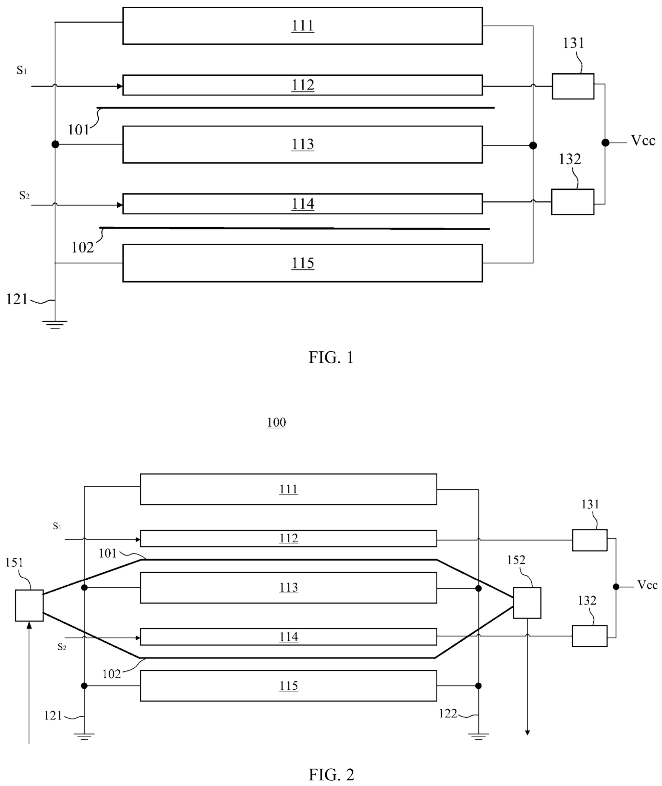

As shown in FIG. 1, according to an aspect of the present disclosure, an electro-optic modulator 100 is provided. The electro-optic modulator 100 includes a first branch waveguide 101, a second branch waveguide 102, and a radio frequency electrode. The radio frequency electrode includes a first ground electrode 111, a first signal electrode 112, a second ground electrode 113, a second signal electrode 114, and a third ground electrode 115 which are spaced apart in sequence, where the first signal electrode 112 and the second signal electrode 114 are configured to receive driving signals S1 and S2, the first branch waveguide 101 and the second branch waveguide 102 are separately located in a spacing region between any two adjacent electrodes of the radio frequency electrode, and electric field directions at positions where the first branch waveguide 101 and the second branch waveguide 102 are located are opposite to each other.

The electro-optic modulator 100 may be formed by having the first branch waveguide 101, the second branch waveguide 102, and the radio frequency electrode formed on a substrate having an electro-optic effect. The first branch waveguide 101 and the second branch waveguide 102 may be Mach-Zehnder optical waveguides. The first branch waveguide 101 and the second branch waveguide 102 are each made of an electro-optic material, with a refractive index changing with an applied voltage, so that optical signals for two beams have a phase difference therebetween when reaching an output terminal of the electro-optic modulator. The radio frequency electrode may be an electrode prepared and formed on the substrate, and a material of the radio frequency electrode may be a high-conductivity and low-resistance material such as gold, silver, copper, aluminum, or graphene.

The radio frequency electrode includes two signal electrodes and three ground electrodes. The signal electrodes are spaced apart from the ground electrodes in sequence, so that each signal electrode is sandwiched between two ground electrodes. As shown in FIG. 1, the first signal electrode 112 is sandwiched between the first ground electrode 111 and the second ground electrode 113, and the second signal electrode 114 is sandwiched between the second ground electrode 113 and the third ground electrode 115. The five electrodes of the radio frequency electrode form four spacing regions, each of which is located between a signal electrode and a ground electrode. The first branch waveguide 101 and the second branch waveguide 102 may be respectively arranged in two of the four spacing regions.

In some examples, the driving signal S1 provided to the first signal electrode 112 and the driving signal S2 provided to the second signal electrode 114, which are provided from the outside of the modulator, may be two differential signals with the same amplitude and opposite phases. Using the differential signals may further improve the anti-interference ability of the modulator. In the modulator, a potential applied to an optical waveguide is a potential difference between a signal electrode and a ground electrode that are adjacent. Since the driving signals are the differential signals, the electric field directions at the positions where the first branch waveguide 101 and the second branch waveguide 102 are located may be the same, which results in the same potential applied to the optical waveguides, making it impossible to achieve phase modulation of optical signals in different branches. In this embodiment, the first branch waveguide 101 and the second branch waveguide 102 are respectively arranged in two spacing regions with opposite electric field directions. For example, the first branch waveguide 101 is arranged between the first signal electrode 112 and the second ground electrode 113, and the second branch waveguide 102 is arranged between the second signal electrode 114 and the third ground electrode 115. It may be understood that the first branch waveguide 101 and the second branch waveguide 102 may be distributed in other suitable positions, as long as electric field directions at their respective positions are opposite.

Potentials at the first ground electrode 111, the second ground electrode 113, and the third ground electrode 115 are ground potentials, and for example, the electrodes may be grounded by being connected to a ground line. The first signal electrode 112 and the second signal electrode 114 are configured to receive respective driving signals, thereby forming an electric field that is of a potential difference between a signal electrode and its adjacent ground electrode and that is applied on both sides of each optical waveguide.

By designing a structure of the radio frequency electrode such that the two signal electrodes are each sandwiched between the three ground electrodes, electrical crosstalk between the signal electrodes may be effectively suppressed, which makes the electric field applied to the optical waveguide in the modulator more stable, thereby improving the stability of signal transmission, and achieving higher modulation efficiency.

In some embodiments, respective first terminals of the first ground electrode 111, the second ground electrode 113, and the third ground electrode 115 are connected to a first grounding signal line 121, and respective second terminals of the first ground electrode 111, the second ground electrode 113, and the third ground electrode 115, which are away from the respective first terminals, are connected via a wire.

The radio frequency electrode may be an electrode extending in an extension direction of the optical waveguide in the electro-optic modulator 100. In some examples, the first ground electrode 111, the second ground electrode 113, the third ground electrode 115, the first signal electrode 112, and the second signal electrode 114 all extend in the same direction. When designing electrodes, one terminal of each of a plurality of ground electrodes is usually grounded. For example, as shown in FIG. 1, the respective first terminals of the first ground electrode 111, the second ground electrode 113, and the third ground electrode 115 are each connected to the first grounding signal line 121 to achieve grounding. However, since the electrodes have a specific length in the extension direction, the second terminals of the plurality of ground electrodes away from their ground terminals (the first terminals) are free terminals, and potentials at the free terminals are difficult to remain unchanged. In particular, under the interference of electrical signals from surrounding electrodes, potentials at the second terminals of the ground electrodes may fluctuate to a specific extent, which may cause a potential difference between the signal electrode and the ground electrode at their second terminals to fluctuate relative to a potential difference at their first terminals, thereby affecting the modulation of the optical waveguide. It may be understood that the first terminal and the second terminal referred to in this embodiment may be any two opposite terminals of the ground electrode in the extension direction of the optical waveguide, but do not necessarily correspond to a signal input terminal and a signal output terminal of the modulator. In some embodiments, the first terminal of the ground electrode may also be a terminal where the signal output terminal of the modulator is located, and the second terminal of the ground electrode may be a terminal where the signal input terminal of the modulator is located.

The first grounding signal line 121 may be one ground line or a plurality of distributed ground lines. The first ground electrode 111, the second ground electrode 113, and the third ground electrode 115 may be connected to their respective first grounding signal lines 121, respectively, or some or all of them may be connected to one first grounding signal line 121.

In this embodiment, the second terminals of the three ground electrodes are connected via the wire, so that the potentials at the second terminals of the ground electrodes may remain the same, which improves the stability of the potential difference between the signal electrode and the ground electrode along the extension direction of the optical waveguide, thereby suppressing the degradation of modulation effect caused by fluctuations in potential differences at different positions.

In some embodiments, as shown in FIG. 1, the respective first terminals of the first ground electrode 111, the second ground electrode 113, and the third ground electrode 115 are connected via a wire.

The first ground electrode 111, the second ground electrode 113, and the third ground electrode 115 need to be grounded separately to maintain their potentials at the ground potential. However, grounding the plurality of electrodes may lead to complex circuit connections and a potential risk of unreliable grounding connections. The first terminals of the plurality of ground electrodes are connected via the wire. In this way, even if some of the ground lines of the ground electrodes fail, the consistency of the potentials of the ground electrodes may be maintained through such a connection method, thereby improving the stability of a modulated signal.

In some embodiments, as shown in FIG. 2, the respective second terminals of the first ground electrode 111, the second ground electrode 113, and the third ground electrode 115 are each connected to a second grounding signal line 122.

The second grounding signal line 122 may be a plurality of distributed ground lines respectively connected to the second terminals of one or more corresponding ground electrodes, or may be a single ground line connected to the second terminals of the plurality of ground electrodes simultaneously. In some examples, the second grounding signal line 122 may be reused from other ground lines, for example, being reused from the first grounding signal line 121, which means that the first terminal and the second terminal of the ground electrode are both connected to the same grounding signal line.

The second terminals of the first ground electrode 111, the second ground electrode 113, and the third ground electrode 115 are each grounded through the second grounding signal line 122, so that distal ends of the ground electrodes can also be stably maintained at the ground potential, which can maintain a potential balance at both terminals of the ground electrodes and the consistency of the potentials at the second terminals of the plurality of ground electrodes, thereby improving the stability of a radio frequency transmission signal.

In some embodiments, as shown in FIG. 1 and FIG. 2, the electro-optic modulator 100 further includes a first load resistor 131 and a second load resistor 132 connected in parallel, where a first terminal of the first load resistor 131 is connected to the first signal electrode 112, a first terminal of the second load resistor 132 is connected to the second signal electrode 114, and a second terminal of the first load resistor 131 is connected to a second terminal of the second load resistor 132 and is connected to a power supply voltage Vcc.

The first load resistor 131 and the second load resistor 132 may be configured to perform differential-mode impedance matching on high-speed driving signals. Connecting the first load resistor 131 and the second load resistor 132 to the first signal electrode 112 and the second signal electrode 114, respectively, and then connecting them to the power supply voltage Vcc in parallel may stabilize a voltage at the second terminals of the signal electrodes, thereby improving the quality of driving signals of the modulator.

In some embodiments, as shown in FIG. 2, the electro-optic modulator 100 further includes a capacitor 140, where the respective second terminals of the first ground electrode 111, the second ground electrode 113, and the third ground electrode 115 are connected to a first plate of the capacitor 140, and the respective second terminals of the first load resistor 131 and the second load resistor 132 are connected to a second plate of the capacitor 140.

Arranging the capacitor between the second terminals of the ground electrodes and the second terminals of the load resistors can effectively isolate the impact of direct current signals, especially the interference of direct current signals on the signal electrodes to non-grounded terminals of the ground electrodes. At the same time, the capacitor enables the signals on the signal electrodes to use a ground potential nearby as a reference, thereby improving the stability of the radio frequency transmission signal. In addition, arranging the capacitor at the second terminals of the load resistors that are connected to a power supply can stabilize the voltage at the second terminals of the signal electrodes, which reduces the loss of electrical signals, thereby improving the modulation efficiency.

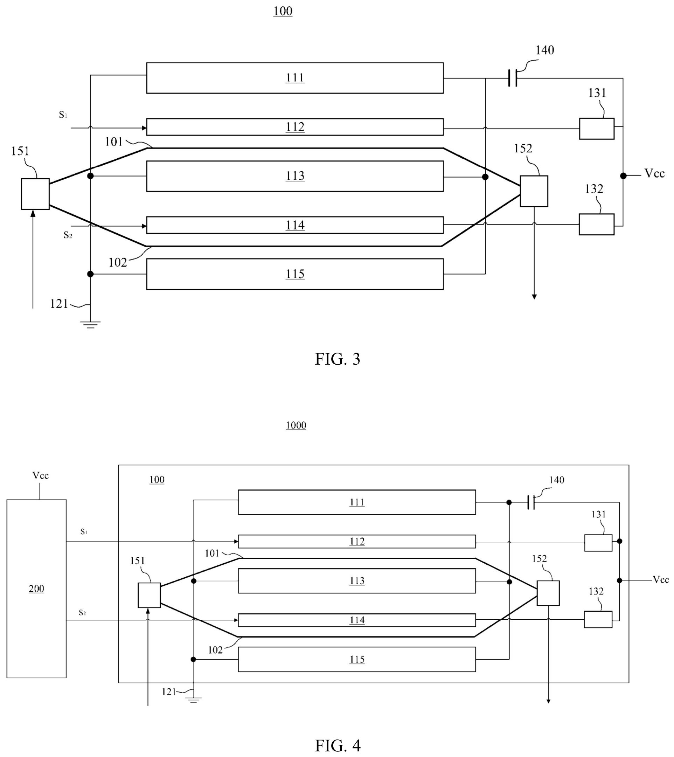

In some embodiments, as shown in FIG. 2 and FIG. 3, the electro-optic modulator 100 further includes a light splitting unit 151 and a light combining unit 152. The light splitting unit 151 is separately connected to an input terminal of the first branch waveguide 101 and an input terminal of the second branch waveguide 102. The light combining unit 152 is separately connected to an output terminal of the first branch waveguide 101 and an output terminal of the second branch waveguide 102.

The light splitting unit 151 may use a Y-branch beam splitting optical waveguide, and a light combining element 30 may use a Y-branch beam combining optical waveguide. In one example, the light splitting unit 151 is specifically a 1:2 optical splitter, which is configured to evenly split an optical signal into two branched optical signals at a splitting ratio of 1:1, and output the signals to the input terminal of the first branch waveguide 101 and the input terminal of the second branch waveguide 102, respectively. The light combining unit 152 is specifically a 2:1 optical combiner, which is configured to combine two modulated branched optical signals received from the output terminal of the first branch waveguide 101 and the output terminal of the second branch waveguide 102 into one modulated optical signal and output the signal.

According to an aspect of the present disclosure, as shown in FIG. 4, an optical emitter 1000 is provided. The optical emitter includes the electro-optic modulator 100 in the previous aspect.

In some embodiments, the optical emitter 1000 further includes an amplifier 200, where the amplifier 200 is connected to the electro-optic modulator 100, to separately provide driving signals to the first signal electrode 112 and the second signal electrode 114.

For a modulator with a high driving voltage, it is necessary to add the amplifier 200 in front of the modulator. The amplifier 200 may be connected to the electro-optic modulator 100 via direct coupling. The amplifier 200 is configured to generate driving signals and provide the signals to the first signal electrode 112 and the second signal electrode 114 of the electro-optic modulator. In some examples, the driving signals S1 and S2 may be high-speed differential driving signals.

In some embodiments, the second terminal of the first load resistor 131 is connected to the second terminal of the second load resistor 132 and is connected to the power supply voltage Vcc, which is supplied to the amplifier to power the amplifier.

The second terminals of the load resistors may be connected to a power supply voltage that is the same as an operating voltage of the amplifier. In one example, the amplifier may be powered by the power supply voltage. For example, reverse power supply may be achieved by connecting the amplifier to a connection terminal of the power supply voltage Vcc through a transmission line of the modulator, which can simplify the internal wiring arrangement of the optical emitter.

On the basis of the above design of the electro-optic modulation module 100 and the achieved beneficial effects, the optical emitter 1000 has improved device performance accordingly, with better signal transmission stability and higher modulation efficiency.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the accompanying drawings, and these terms are used merely for ease of description, rather than indicating or implying that the apparatus or element referred to must have particular orientations and be constructed and operated in the particular orientations, and therefore should not be construed as limiting the scope of protection of the present disclosure.

In addition, the terms such as "first", "second" and "third" are merely for descriptive purposes and should not be construed as indicating or implying relative importance or implicitly indicating the number of technical features indicated. Thus, the features defined with "first", "second" and "third" may explicitly or implicitly include one or more features. In the description of the present disclosure, the term "a plurality of" means two or more, unless otherwise explicitly and specifically defined.

In the present disclosure, unless expressly stated or defined otherwise, the terms such as "mounting", "connection", "connected" and "fixing" should be interpreted broadly, for example, they may be a fixed connection, a detachable connection, or an integrated connection; may be a mechanical connection, or an electrical connection, or communication; and may be a direct connection or an indirect connection by means of an intermediate medium, or may be internal communication between two elements or interaction between the two elements. For those of ordinary skill in the art, the specific meanings of the above terms in the present disclosure can be understood according to specific circumstances.

In the present disclosure, unless expressly stated or defined otherwise, the expression of the first feature being "above" or "below" the second feature may include the case that the first feature is in direct contact with the second feature, or the case that the first feature and the second feature are not in direct contact but are contacted via another feature therebetween. Furthermore, the first feature being "over", "above" or "on" the second feature includes the case where the first feature is directly or obliquely above the second feature, or merely indicates that the first feature is at a higher level than the second feature. The first feature being "below", "under" or "beneath" the second feature includes the case where the first feature is directly or obliquely below the second feature, or merely indicates that the first feature is at a lower level than the second feature.

This description provides many different implementations or examples that can be used to implement the present disclosure. It should be understood that these different implementations or examples are purely illustrative and are not intended to limit the scope of protection of the present disclosure in any way. On the basis of the present disclosure of the description of the present disclosure, those skilled in the art will be able to conceive of various changes or substitutions. All these changes or substitutions shall fall within the scope of protection of the present disclosure. Accordingly, the scope of protection of the present disclosure shall be subject to the scope of protection of the claims.

## Claims

1. An electro-optic modulator, comprising:
a first branch waveguide and a second branch waveguide; and
a radio frequency electrode, comprising a first ground electrode, a first signal electrode, a second ground electrode, a second signal electrode, and a third ground electrode which are spaced apart in sequence,
wherein the first signal electrode and the second signal electrode are configured to receive driving signals; and
the first branch waveguide and the second branch waveguide are separately located in a spacing region between any two adjacent electrodes of the radio frequency electrode, and electric field directions at positions where the first branch waveguide and the second branch waveguide are located are opposite to each other.

2. The electro-optic modulator according to claim 1, wherein
respective first terminals of the first ground electrode, the second ground electrode, and the third ground electrode are connected to a first grounding signal line, and respective second terminals of the first ground electrode, the second ground electrode, and the third ground electrode, which are away from the respective first terminals, are connected via a wire.

3. The electro-optic modulator according to claim 2, wherein
the respective first terminals of the first ground electrode, the second ground electrode, and the third ground electrode are connected via a wire.

4. The electro-optic modulator according to claim 2, wherein
the respective second terminals of the first ground electrode, the second ground electrode, and the third ground electrode are each connected to a second grounding signal line.

5. The electro-optic modulator according to any one of claims 2 to 4, wherein
the optical modulator further comprises a first load resistor and a second load resistor connected in parallel; and
a first terminal of the first load resistor is connected to the first signal electrode, a first terminal of the second load resistor is connected to the second signal electrode, and a second terminal of the first load resistor is connected to a second terminal of the second load resistor and is connected to a power supply voltage.

6. The electro-optic modulator according to claim 5, wherein the electro-optic modulator further comprises a capacitor;
the respective second terminals of the first ground electrode, the second ground electrode, and the third ground electrode are connected to a first plate of the capacitor; and
the respective second terminals of the first load resistor and the second load resistor are connected to a second plate of the capacitor.

7. The electro-optic modulator according to any one of claims 1 to 6, wherein the electro-optic modulator further comprises:
a light splitting unit separately connected to an input terminal of the first branch waveguide and an input terminal of the second branch waveguide; and
a light combining unit separately connected to an output terminal of the first branch waveguide and an output terminal of the second branch waveguide.

8. An optical emitter, comprising the electro-optic modulator according to any one of claims 1 to 7.

9. The optical emitter according to claim 8, wherein the optical emitter further comprises an amplifier,
wherein the amplifier is connected to the electro-optic modulator, to separately provide driving signals to a first signal electrode and a second signal electrode of the electro-optic modulator.

10. The optical emitter according to claim 9, wherein
the optical modulator further comprises a first load resistor and a second load resistor connected in parallel;
a first terminal of the first load resistor is connected to the first signal electrode, a first terminal of the second load resistor is connected to the second signal electrode, and a second terminal of the first load resistor is connected to a second terminal of the second load resistor and is connected to a power supply voltage; and
the power supply voltage is supplied to the amplifier to power the amplifier.
